# EUROPEAN PATENT APPLICATION

(11) **EP 0 597 655 A1**
(43) Date of publication of application: **18.05.1994**
(21) Application number: 93308909.6
(22) Date of filing: 08.11.1993
(51) Int. Cl.: B62D 5/07, B62D 5/30, B62D 7/15

(54) **Four-wheel steering**

(30) Priority: 13.11.1992 GB 9223840
(71) Applicant: Fermec Manufacturing Limited, Manchester M32 OYH (GB)
(72) Inventor: Clifton, Brian, Stockport, Cheshire SK12 2BX (GB)
(74) Representative: Kelvie, George Thomas

(57) **Abstract**

A vehicle (10) with selectable two wheel steer or four wheel steer is described. The vehicle includes front and rear steerable wheels (FR, FL, RR, RL) with front and rear steering angle detecting means (43-46). It also includes fluid pressure operated actuator means (29) for steering the rear wheels using pressurised fluid from a pump (33), other fluid pressure operated services (36) supplied with pressurised fluid from the pump and control means (38). The control means is arranged to compare the front and rear steering angles to provide an error signal indicating a deviation from a predetermined mode-dependant relationship which is used to control operation of the actuator means so as to tend to reduce the error signal to zero and give priority flow of pressurised fluid to the actuator means if the error signal exceeds a predetermined value.

## Description

The invention relates to a vehicle, in particular to a vehicle which can be operated in a plurality of selectable steering modes one of which uses wheels on one axle to steer and the remaining modes use wheels on a plurality of axles to steer.

Vehicles having such selectable steering modes are well known particularly in four wheeled work vehicles such as industrial tractors or telescopic handling vehicles. In general such vehicles have a two-wheel-steer mode which uses only the front wheels and conventional four-wheel-steer and crab-steer modes which use all four wheels.

It is an object of the present invention to provide an improved vehicle with four-wheel-steering.

The present invention therefore provides a vehicle with selectable two wheel steer or four wheel steer, the vehicle having:
- front steerable wheels;
- rear steerable wheels;
- front and rear steering angle detecting means;
- fluid pressure operated actuator means for steering the rear wheels using pressurised fluid from a pump;
- other fluid pressure operated services supplied with pressurised fluid from the pump, and
- control means arranged to:-
   - compare the front and rear steering angles to provide an error signal indicating a deviation from a predetermined mode-dependant relationship which is used to control operation of the actuator means so as to tend to reduce the error signal to zero, and
   - give priority flow of pressurised fluid to the actuator means if the error signal exceeds a predetermined value.

For instance if the steering angle error exceeds 1 degree the fluid supply to the other services may be shut down in proportion to the steering angle error until at 5 degrees the fluid supply to the other services is completely shut down. This priority flow ensures that the steering takes priority over the other services which may for instance be a loader or digger attached to the vehicle.

The system may have a threshold steering angle error below which value the rear wheels are not steered to reduce the error. The threshold may for instance be 1 degree. This prevents constant readjustment of the rear wheel steering angle and therefore reduces the wear and tear on the rear wheel steering actuator and linkages.

The vehicle may have a first hydraulic circuit with a first hydraulic pump for the steering of the front wheels and a second hydraulic circuit with a second hydraulic pump for the steering of the rear wheels and any other hydraulic services.

The vehicle may be arranged such that the steering modes can be changed at any steering angle of the wheels. The rear wheels then being controlled such that they are steered to the angle required in the newly selected mode.

One embodiment of the present invention will now be described, by way of example only, with reference to the accompanying drawings in which:-
- Figure 1: schematically illustrates a vehicle according to the present invention, and
- Figures 2, 3 & 4: illustrate the manner in which the ground engaging wheels steer in two-wheel-steer (2WS), conventional four-wheel-steer (C4WS) and crab-steer (CS) modes respectively.

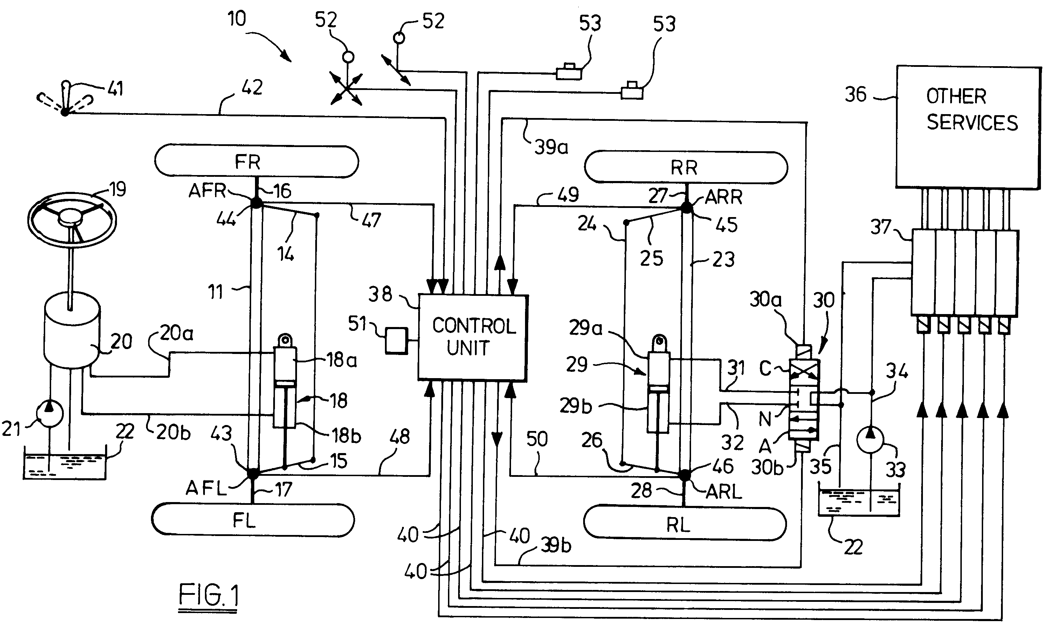

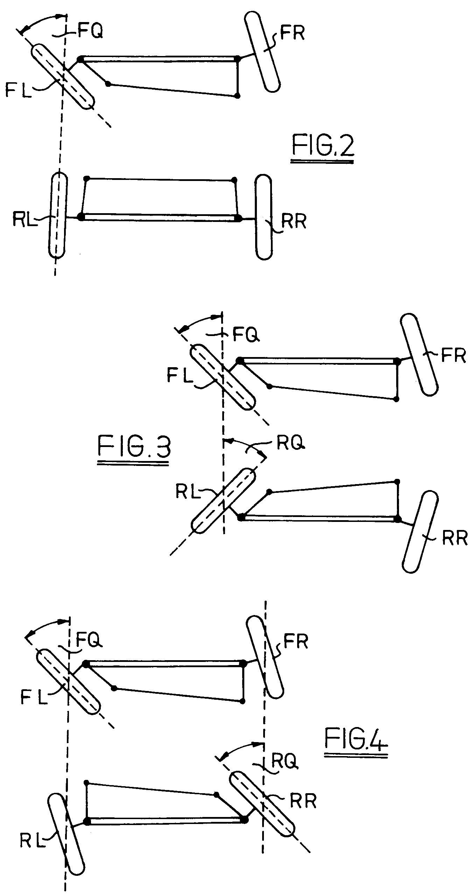

Referring to Figure 1, this shows a vehicle 10 such as a tractor-digger-loader which provides three operator selectable steering modes: two-wheel-steer (2WS), conventional four-wheel-steer (C4WS) and crab four-wheel-steer (CS). The three modes are illustrated in Figures 2, 3 and 4 respectively.

The vehicle 10 includes a front axle 11 with right and left ground engaging wheels FR, FL. The front axle 11 has a conventional Ackerman steering geometry with a track rod 13, track arms 14 and 15, and stub axles 16 and 17 which pivot about steering axes AFR and AFL. The wheels FR, FL are steered by a double acting hydraulic actuator 18 connected between the axle 11 and the left track arm 15. Fluid supply to and exhaust from the hydraulic actuator 18 is controlled, in response to movement of the steering wheel 19 by the operator, via a conventional hydrostatic steering unit 20, along lines 20a and 20b. The steering unit 20 is supplied with pressurised fluid from a hydraulic steering pump 21 and exhausts fluid to a reservoir 22.

The vehicle 10 also includes a rear axle 23 with right and left ground engaging wheels RR and RL respectively. The rear wheels again employ Ackerman steering geometry with a track rod 24, track arms 25 and 26, and stub axles 27 and 28 steerable about steering axes ARR and ARL. The wheels RR, RL are steered by a double acting hydraulic actuator 29. Fluid supply to and exhaust from the hydraulic actuator 29 is controlled by a proportional flow, three-position four-way, solenoid operated valve 30, along lines 31 and 32. The three valve operating positions are referenced C, N and A in Figure 1. The valve 30 receives pressurised fluid from a main hydraulic pump 33 of the vehicle via line 34 and exhausts fluid to reservoir 22 via line 35. Solenoids 30a and 30b of valve 30 operate in response to control signals from control unit 38 received via lines 39a and 39b to control the direction and flow rate of fluid to the actuator 29. The main hydraulic pump 33 also supplies pressurised hydraulic fluid to other services 36 such as digger and loader operating cylinders via additional solenoid operated valves 37. The additional valves 37 are proportional flow valves and control the supply of fluid to and the exhaust of fluid from the other services 36. The valves 37 are controlled by control signals from the control unit 38 received via lines 40. The control signals are generated by the control unit 38 in accordance with the operation of control levers 52, switches 53 etc by which the other services 36 are commanded, modulated by the demands of the four-wheel steer system if appropriate (as described later).

A three-way mode selector switch 41 is connected to, and supplies signals representing the operative mode to, the control unit 38 via line 42. Four wheel angle sensors 43, 44, 45 and 46, in the form of rotary potentiometers, are also connected to the control unit 38 via lines 47, 48, 49 and 50 respectively. The sensors 43 to 46 are located adjacent to their respective wheels FR, FL, RR and RL, at the steering axes AFR, AFL, ARR, ARL, and each supplies a signal to the control unit 38 which represents the current angle of the respective wheel with respect to the associated axle. Every 5ms the control unit 38 compares the steering angle of the front and rear wheels in a manner appropriate for the operative mode, as will be described later, and determines a steering angle error. The control unit 38 then generates control signals which control the solenoids 30a, 30b such that the rate of flow of fluid to or from the actuator 29 is proportional to the steering angle error and in a direction to reduce that error.

The hydraulic control of the front ground engaging wheels FR, FL operates generally as follows. When the steering wheel 19 is turned clockwise by the operator the steering pump 20 directs fluid to the actuator 18 along line 20a. The fluid entering chamber 18a of the actuator 18 from line 20a forces fluid out of chamber 18b into line 20b and thus back to the steering unit 20. This results in the actuator pushing the left track arm 15 such that it rotates clockwise about the axis AFL and thus the front wheels FL and FR both rotate clockwise about their respective steering axes AFL, AFR. Similarly, when the operator turns the steering wheel 19 anticlockwise the steering unit 20 directs fluid to the actuator 18 along line 20b. Fluid entering chamber 18b from line 20b forces fluid out of chamber 18a, along line 20a and thus back to the pump 20. The left track arm 1 5 is thus pulled and rotated anticlockwise about the axis AFL resulting in the front wheels rotating anticlockwise about their respective steering axes AFL, AFR.

The hydraulic control of the rear ground engaging wheels RR, RL operates in general as follows. When the control unit 38 is not generating signals to turn the rear wheels the valve 30 is maintained in its closed, neutral position N.

When the control unit 38 generates a control signal to turn the rear ground engaging wheels RR, RL clockwise about their respective steering axes ARR, ARL this activates the solenoids 30a, 30b such that the valve is switched to operating position C. In this position pressurised fluid is supplied to chamber 29a of the actuator 29 via line 30c. Fluid entering chamber 29a forces fluid out of chamber 29b into line 32 and thus to the valve 30 from where it is exhausted to the reservoir 22 via line 35. Similarly, when the control unit 38 generates a control signal to turn the rear wheels RR, RL anticlockwise the solenoids 30a, 30b are activated such that the valve 30 is switched to operating position A. Pressurised fluid is then supplied to chamber 29b via line 32, and fluid is forced out of chamber 29a back along line 31.

The mode selector switch 41 is used by the operator to select 2WS mode, C4WS mode or CS mode, and an appropriate signal is sent to the control unit 38.

The steering angle of an axle is defined, for convenience, as the angle of the wheel on the axle rolling round the smaller of the two radii which result from the Ackerman steering geometry. Front and rear steering angles are illustrated in Figures 2, 3 and 4 as the angles FQ and RQ respectively. In operation the output signals from the sensors 43 to 46 are used as input values for a steering angle look-up table in the memory of the control unit 38. The control unit is arranged such that the steering angle obtained from the look-up table is the same, i.e. FQ or RQ, irrespective of which sensor associated with that axle the input value came from. This is possible because the right and left wheels on each axle have a fixed angular relationship, as a result of the Ackerman steering geometry.

During normal operation of the system the front and rear steering angles are determined using only the outputs from the sensors 44, 45 on the right hand side wheels FR, RR. The rear wheel steering is then controlled in response to these values as described below. However, the outputs from the sensors 43, 46 on the left hand side wheels FL, RL are used to double check the system for safety purposes. The checking is performed on each axle separately, and if a fault is found on either axle 11 or 23 the system enters fault mode. The action taken depends on which axle has a fault and which steering mode is operative at the time. If the front axle 11 is faulty and either C4WS or CS is selected then the system reverts to 2WS, straightens up the rear wheels RR, RL, and a warning buzzer 51 sounds. If, however, the front axle 11 is faulty and 2WS is selected no action is taken and no warning is given. This provides the ability for fault diagnosis since if the buzzer 51 sounds in C4WS but does not do so if 2WS is selected then the fault must be on the front axle 11. If the rear axle 23 is faulty and C4WS or CS is selected the rear wheels RR, RL are frozen at their current positions and the warning buzzer 51 sounds.

In 2WS mode the front wheels FR, FL steer as commanded by the operator turning the steering wheel 19, and rear wheels are not steered but are hydraulically locked in their central straight ahead position in which they are aligned with each other and generally perpendicular to the rear axle 23 as shown in Figure 2. That is the front steering angle is FQ and the rear steering angle is RQ = 0. Thus in 2WS mode valve 30 is maintained in its neutral closed position N so that the rear wheels RR, RL are hydraulically locked and do not steer. However, the control unit 38 continues to calculate the front and rear steering angles and if for any reason, such as a hydraulic leak, the rear steering angle should deviate from zero, thus indicating that the wheels RR, RL have wandered from their non-steered positions, the valve 30 is powered up and the solenoids 30a, 30b operated appropriately to bring the rear wheels back to their zero steering angle.

In C4WS mode the front wheels FR, FL steer as in 2WS mode and the rear wheels RR, RL are made to steer in equal but opposite directions to the front wheels FR, FL, as shown in Figure 3. That is the rear right wheel RR steers to an equal but opposite angle to that of the front right wheel FR. Similarly the left rear wheel RL steers to an equal but opposite angle to that of the front left wheel FL. Thus every 5ms the control unit 38 compares the front and rear steering angles FQ and RQ, which should conform to the relationship RQ = -FQ, to obtain the steering angle error signal. The control unit 38 then generates control signals for the solenoids 30a, 30b using this error signal to ensure that the rear steering angle RQ follows the above relationship.

In CS mode the front wheels FR, FL steer as in 2WS and the rear wheels RR, RL steer to the same angles as their diagonally opposite wheels. That is the rear left wheel RL steers to the same angle as the front right wheel FR and the rear right wheel RR steers to the same angle as the front left wheel FL (see Figure 4). Thus every 5ms the control unit 38 compares the front and rear steering angles FQ and RQ, which should conform to the relationship RQ = FQ, to obtain the steering angle error. The control unit 38 then generates control signals for solenoids 30a, 30b to correct the rear steering angle RQ.

To prevent constant readjustment of the angle of the rear wheels with respect to the front wheels a dead band is usually set. That is the steering angles of the rear wheels are only adjusted if the steering angle error is greater than a set amount. The deadband may typically be set in the range plus or minus 1 to 2 degrees, but the value will vary according to the type of vehicle concerned.

The control unit 38 also operates to give priority flow of hydraulic fluid to the steering of the rear wheels RR, RL over other systems 36. That is, when the steering angle error rises, thus indicating that the rear steering actuator 29 is not receiving sufficient fluid for the rear wheels RR, RL to follow the front wheels FR, FL, fluid is diverted from the other services 36 to the rear steering actuator 29 until the steering angle error is reduced. For several degrees above the deadband, e.g. 1 to 5 degrees, the other systems 36 supplied from the main pump 33 are progressively shut down in proportion to the steering angle error. For steering angle errors above 5 degrees no fluid is supplied to the other services 36. The values of the steering angle error at which the mode of control alters will differ for different vehicles as required.

This priority flow is achieved by modulation of the control signals issued by the control unit 38 via lines 40 to the additional proportional flow valves 37 which control the supply of fluid to the other services 36. Thus the control unit 38 multiplies signals corresponding to the commanded level of fluid flow to the other services 36 by a factor between one and zero inclusive. A factor of one means that priority flow is not required and the commanded level of fluid flow to the other services 36 is supplied, for instance if the steering angle error is less than one degree. A factor between one and zero means that priority flow is required but that a proportion of the commanded level of fluid flow to the other services 36 is supplied, for instance if the steering angle error is between one and five degrees. A factor of zero means that the steering angle error is sufficiently large that the fluid flow to the other services is completely shut down, for instance if the steering angle error is greater than five degrees.

To conserve power, if the solenoids 30a, 30b have not been activated for 5s the valve 30 is powered down. Clearly this can only occur when the steering angle error falls within the deadband. The valve 30 is then powered back up when it is next necessary to move the solenoids 30a, 30b.

The steering mode of the vehicle 10 may be changed at any time and with the ground engaging wheels at any angles. Once the change of mode has been selected the control unit 38 simply generates the appropriate control signals to switch valve 30 to the correct operating position and to control the fluid flow rate such that the rear wheels turn to the appropriate angle for the newly selected mode. The time taken for the wheels to reach the correct angles for the newly selected mode will depend on the manner in which the valve 30 is controlled but may be of the order of 1s if full lock to lock movement is required.

For instance, if the vehicle is in C4WS and the operator selects 2WS, the control unit 38 will instantly change modes and cease comparing the measured rear steering angle RQ with the measured front steering angle FQ and will start to compare the measured rear steering angle RQ with appropriate signals for alignment straight ahead. Thus, if the rear wheels RR, RL are not aligned straight ahead when the mode change is made the control unit 38 will calculate a steering angle error and then generate a control signal for the solenoids 30a, 30b to correct the rear steering angle and bring the rear wheels into alignment straight ahead.

When the vehicle is started up the steering will be controlled according to the position of the mode selector switch 41 at the time. Thus if the mode selected differs from that which was selected when the vehicle was switched off the rear wheels may need correction of their steering angles straight away. This will be achieved in the same way as when a different mode is selected during use of the vehicle. In some circumstances rapid movement of the rear wheels, possibly from lock to lock, may be deemed dangerous and thus special start-up conditions may be provided. These may be in the form of a button which must be depressed before any wheel movement is made, thus allowing the operator to check that the area is clear before the rear wheels turn. Alternatively the control unit 38 may be programmed not to move the rear wheels until the steering wheel 19 is first moved by the operator. A third alternative may be an upper limit on the speed with which the rear wheels are moved on start-up.

If the vehicle emergency stop button is activated thus cutting all electrical power to the hydraulic systems the hydraulic valve 30 returns to the neutral position N under the action of a spring (not shown) and all hydraulic movements are halted.

The steering arrangement of the vehicle described is by way of example only. Clearly there are many alternative ways in which a vehicle according to the invention may be constructed. For instance the front and rear wheels may be controlled with pressurised fluid supplied from the same pump. This pump could be either a main vehicle pump or a separate steering pump. In addition, where separate pumps are used the fluid from the two circuits may be exhausted to different reservoirs.

The invention is not limited to the use of the front wheels to provide the steering in 2WS mode, the rear wheels may be used in this mode with the front wheels being brought in for modes using all four wheels. Nor is the invention limited to a vehicle having two axles with four wheels. For instance, a vehicle with three axles and six wheels may have 2WS and 6WS modes.

## Claims

1. A vehicle (10) with selectable two wheel steer or four wheel steer modes, the vehicle including:
- front steerable wheels (FR, FL);
- rear steerable wheels (RR, RL);
- front and rear steering angle detecting means (43-46);
- fluid pressure operated actuator means (29) for steering the rear wheels using pressurised fluid from a pump (33);
- other fluid pressure operated services (36) supplied with pressurised fluid from the pump (33), and
- control means(38)
and being characterised in that the control means is arranged to:-
- compare the front and rear steering angles to provide an error signal indicating a deviation from a predetermined mode-dependant relationship which is used to control operation of the actuator means so as to tend to reduce the error signal to zero, and
- give priority flow of pressurised fluid to the actuator means if the error signal exceeds a first predetermined threshold value.

2. A vehicle according to Claim 1 characterised in that the first predetermined threshold value is less than or equal to five degrees.

3. A vehicle according to Claim 2 characterised in that the first predetermined threshold value is less than or equal to one degree.

4. A vehicle according to Claim 1, 2 or 3 characterised in that the control means is further arranged such that if the error signal is less than a second predetermined threshold value the rear wheels are not steered to reduce the error signal.

5. A vehicle according to Claim 4 characterised in that the second predetermined threshold value is less than or equal to one degree.

6. A vehicle according to any preceeding claim characterised in that the pump (33) also supplies pressurised fluid to fluid pressure actuator means (18) for steering the front wheels (FR, FL).

7. A vehicle according to any one of Claims 1 to 5 characterised in that it incorporates an additional pump (21) for the supply of pressurised fluid to fluid pressure operated actutor means (18) for the steering the front wheels (FR, FL).

8. A vehicle according to any preceeding claim characterised in that it is arranged to provide three steering modes: front-wheel-steer, conventional-four-wheel-steer and crab-four-wheel-steer.

9. A vehicle according to any preceeding claim characterised in that it is arranged such that the steering modes may be changed at any steering angle of the wheels.

10. A vehicle according to Claim 9 characterised in that it is arranged such that when the operative steering mode is changed the rear wheels are substantially immediately steered to bring them to the appropriate steering angle for the newly operative mode.
